# EUROPÄISCHE PATENTSCHRIFT

(11) **EP 1 279 541 B1**
(45) Veröffentlichungstag und Bekanntmachung des Hinweises auf die Patenterteilung: **28.09.2005**
(21) Anmeldenummer: 02450142.1
(22) Anmeldetag: 26.06.2002
(51) Int. Cl.: B60J 7/20, B60J 7/12

(54) **Verfahren und Vorrichtung zur Betätigung eines Verdecksystems bei Fahrzeugen**
Procedure and device for actuating a vehicle roof system
Procédure et dispositif pour entraîner un système de capote d'un véhicule

(30) Priorität: 23.07.2001 DE 10135808
(43) Veröffentlichungstag der Anmeldung: 29.01.2003
(73) Patentinhaber: Hoerbiger Automatisierungstechnik Holding GmbH, 86972 Altenstadt (DE); Daimler Chrysler AG, 70567 Stuttgart (DE)
(72) Erfinder: Stolle, Klaus, Dipl.-Ing., 86972 Schwabniederhofen (DE); Frank, van de Poel, 72108 Rottenburg (DE)
(74) Vertreter: Laminger, Norbert

(56) Entgegenhaltungen:
- DE-A- 19 714 125
- DE-C- 4 113 616
- DE-U- 9 419 035

## Beschreibung

Die Erfindung betrifft ein Verfahren zur Betätigung eines Verdecksystems bei Fahrzeugen, bei welchem im Zuge des Aufschwenkens des Kofferraumdeckels das Verdeck in Ruhestellung, allenfalls in zusammengefaltetem Zustand, im wesentlichen parallel zum Kofferraumdeckel des Fahrzeuges verschwenkt werden kann, wobei das Verdeck in Ruhestellung belassen wird, sowie eine Vorrichtung zur Betätigung eines Verdecksystems bei Fahrzeugen, bestehend aus einem, allenfalls aus mehreren, gegeneinander bewegbaren Verdeck-Elementen, welche aus einer Ruhestellung mit vorzugsweise in zusammengefaltetem Zustand angeordneten Elementen entfaltbar sind, wobei die Steueranordnung für die Antriebselemente des Verdecksystems eine Schaltstellung aufweist, in welcher lediglich ein Antriebselement bzw. eine Gruppe von Antriebselementen angesteuert ist, welche das Verdeck in seiner Ruhestellung anhebt.

In der DE-U-9 419 035 ist ein Verdecksystem beschrieben, bei welchem ein aus Verdeckstoff gebildetes Faltverdeck schwenkbeweglich an der Außenseite der Heckklappe des Fahrzeuges angebunden ist. Im zusammengefalteten Zustand liegt das Stoffverdeck in einer als Verdeckabteil genutzten wannenförmigen Mulde in der Außenseite der Heckklappe. Diese Mulde kann durch eine Verdeckschale und seitliche Abdeckklappen abdeckbar sein. Beim Öffnen der Heckklappe wird das Verdeck; insbesonders im Ruhezustand, parallel mitgeschwenkt. Während diese Konstruktion für leichte und klein zusammenfaltbare Stoffverdecke durchaus vertretbar ist, ist sie für Verdecke aus festen Dachelementen nicht praktikabel. Das Gewicht dieser Verdecke würde das Öffnen der Heckklappe zu sehr erschweren.

Für diese Verdecke aus festen Dachelementen, wie etwa in der DE-A-197 14 125 beschrieben, sind daher automatische Betätigungsanordnungen üblich, welche die manuelle Handhabung des Verdecks nur in Notfällen erforderlich machen. In der ersten Phase des Schließens des Verdecks wird dieses in noch zusammengefaltetem Zustand aus dem Verdeckabteil hochgeschwenkt und erst anschließend weiter entfaltet.

Bei modernen Cabriolets ist das im Normalfall also automatisch betätigbare Verdeck im zusammengefalteten Zustand in einem Abteil untergebracht, das im Bereich des Kofferraums liegt. Auch sind Konstruktionen möglich, bei welchen das Verdeck im zusammengefalteten Zustand direkt im Kofferraum untergebracht ist. Dadurch würde aber die für die Beladung des Kofferraumes zur Verfügung stehende Öffnung wesentlich eingeschränkt, so dass zur Vereinfachung der Beladung vornesehen ist, das Verdeck ähnlich dem Kofferraumdeckel anzuheben, was aufgrund von dessen Gewicht und der ungüngstigen Hebelverhältnisse der Verdeckkinematik ebenfalls mit automatischer Unterstützung erfolgen soll.

Es war daher die Aufgabe der vorliegenden Erfindung, ein Verfahren für die Verdecksteuerung und eine Vorrichtung zur Betätigung eines Verdecksystems bei Fahrzeugen anzugeben, welche in einfacher und funktionell flexibler Art und Weise eine Beladehilfsfunktion bei Fahrzeugen mit in zusammengefaltetem Zustand im Kofferraum verstauten Verdecken realisiert.

Das erfindungsgemäße Verfahren ist zur Lösung dieser Aufgabe dadurch gekennzeichnet, dass das Verdeck in Ruhestellung in dem durch den Kofferraumdeckel verschließbaren Abteil des Fahrzeuges aufnehmbar und nach Öffnen des Kofferraumdeckels entfaltbar und schließbar ist. So kann mit einer Abdeckung das Auslangen gefunden werden, welche wahlweise eine Funktion als Kofferraumdeckel oder als Verdeckkastendeckel ausführt. Dabei ist in beim Öffnen der Abdeckung in ihrer Funktion als Kofferraumdeckel weiterhin der Vorteil erhalten, daß durch paralleles Mitschwenken des zusammengefalteten Verdecks mit dem Kofferraumdeckel derart eine Vergrößerung der zur Beladung des Kofferraumes zur Verfügung stehenden Öffnung erzielt wird.

Vorteilhafterweise werden im Zuge dieser Bewegung des Verdeckes die Abdeckung um eine erste fahrzeugfeste Achse und das Verdeck um eine zweite fahrzeugfeste Achse verschwenkt, wobei die erste und zweite fahrzeugfeste Achse im wesentlichen parallel zueinander liegen. Diese Vorgangsweise gestattet bei einfachem Aufbau die größtmögliche Öffnung des Kofferraumes und dessen optimale Zugänglichkeit.

Für die zeitliche Abfolge der Bewegung des Kofferraumdeckels bzw. einer beliebigen Abdeckung kann gemäß einem weiteren Merkmal der Erfindung vorgesehen sein, daß die Abdeckung und das Verdeck im wesentlichen gleichzeitig oder in Folge nacheinander bewegt werden.

Die Vorrichtung ist zur Lösung der eingangs gestellten Aufgabe in der einfachsten Ausführungsform dadurch gekennzeichnet, dass die Verdeck-Elemente in Ruhestellung in dem durch den Kofferraumdeckel verschließbaren Abteil aufgenommen sind, und in der Schaltstellung der Steueranordnung, in welcher das Verdeck in seiner Ruhestellung angehoben wird, im wesentlichen parallel zum Kofferraumdeckel des Fahrzeuges verschwenkt werden. Bei dieser Lösung muß lediglich eine einzige Abdeckung vorgesehen sein, die wahlweise als Kofferraumdeckel oder als Verdeckkastendeckel dient. In der erstgenannten Funktion bietet die erfindungsgemäße Konstruktion den zusätzlichen Vorteil, daß durch paralleles Mitschwenken des zusammengefalteten Verdecks mit dem Kofferraumdeckel derart eine Vergrößerung der zur Beladung des Kofferraumes zur Verfügung stehenden Öffnung erzielt wird.

Gemäß einer vorteilhaften Ausführungsform de Erfindung ist die Steueranordnung mit einer elektronischen Steuereinheit verbunden, die Ansteuerung des Antriebselementes bzw. der Gruppe von Antriebselementen freigibt, sobald die Abdeckung des Abteils für das Verdeck geöffnet ist.

Erfindungsgemäß kann in vorteilhafter Weise für die Eingliederung der Beladehilfsfunktion in das vorhandene System zur automatischen Verdeckbetätigung als Antriebselement ein Druckmittelzylinder, vorzugsweise einfach-wirkender hydraulischer Arbeitszylinder, vorgesehen sein. Da das Absenken des Verdecks durch dessen Gewicht bewirkt werden kann, ist ein einfach-wirkender Zylinder für die grundlegenden Funktionen ausreichend.

Um bei einem Stromausfall oder gleichartig wirkenden Störungen des hydraulischen Systems eine Nothaltefunktion für das angehobene Verdeck zu gewährleisten, ist gemäß einem weiteren Merkmal der Erfindung vorteilhafterweise vorgesehen, dass der Arbeitszylinder über ein stromlos geschlossenes Ventil, vorzugsweise ein 3/2-Wege-Sitzventil, mit der Druckmittelquelle verbunden ist.

Vorteilhafterweise ist zur weiteren Erhöhung der Sicherheit zwischen der Druckmittelquelle und dem Ventil ein zur Druckmittelquelle hin schließendes Rückschlagventil eingesetzt.

Eine mechanisch einfache Konstruktion, die dennoch die bestmögliche Öffnung für die Beladung des Kofferraumes gewährleistet, ist gemäß einem weiteren Merkmal der Erfindung bei einer Ausführungsform gegeben, bei welcher die Abdeckung um eine erste fahrzeugfeste Achse und das Verdeck um eine zweite fahrzeugfeste Achse verschwenkbar sind, welche erste und zweite fahrzeugfeste Achse im wesentlichen parallel zueinander liegen.

Je nach Platzangebot und Kinematik des Verdecks selbst kann das Antriebselement bzw. die Gruppe von Antriebselementen unmittelbar am Verdeck angreifen oder auch in bevorzugter Weise das Antriebselement bzw. die Gruppe von Antriebselementen an einem mit zumindest einem Verdeckelement verbundenen Hebel angreift bzw. angreifen, vorzugsweise an einem gegenüber dem Verdeck über die zweite fahrzeugfeste Achse hinausgehenden Hebelarm.

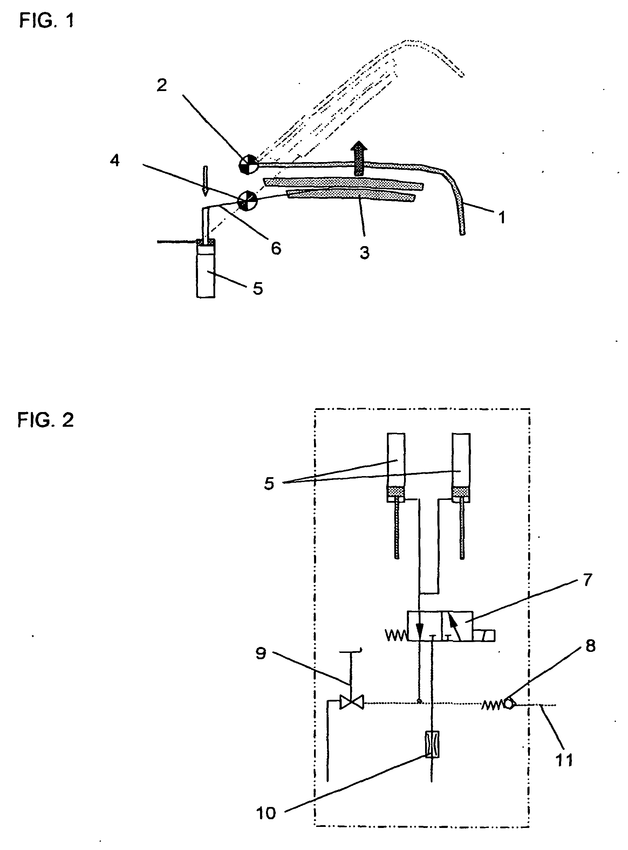

In der nachfolgenden Beschreibung soll ein Ausführungsbeispiel der Erfindung anhand der beigefügten Zeichnungen näher erläutert werden. Dabei zeigt die Fig. 1 eine schematische Seitenansicht eines erfindungsgemäßen Systems und Fig. 2 ist der Abschnitt des hydraulischen Schaltplans für das Beladehilfs-System der Fig. 1.

Ein Kofferraum oder ein ähnliches Abteil eines Fahrzeuges ist mittels einer Abdeckung, beispielsweise einem Kofferraumdeckel 1 verschließbar, welcher Kofferraumdeckel 1 um eine im wesentlichen quer zur Fahrzeugachse und horizontal liegenden Drehachse 2 von der in durchgezogenen Strichen dargestellten geschlossenen Stellung in die in strichlierter Darstellung angedeutete geöffnete Stellung - und vice-versa - verschwenkbar ist. Die Bewegung des Kofferraumdeckels 1 kann dabei manuell, durch Einbindung in das hydraulische System oder auf andere Weise automatisch erfolgen.

Im Kofferraum des Fahrzeuges ist auch das zusammenlegbare Verdeck 3 in zusammengefaltetem bzw. zusammengelegtem Zustand untergebracht. Es ist vorzugsweise um eine zweite Achse 4 im wesentlichen parallel zum Kofferraumdeckel 1 verschwenkbar, um das Beladen des Kofferraumes zu vereinfachen. Die zweite Achse 4 des Verdecks ist dabei vorteilhafterweise parallel und nach unten hin, allenfalls auch ein wenig in Richtung Fahrzeugmitte hin gegenüber der ersten Achse 2 des Kofferraumdeckels 1 versetzt.

Während der Kofferraumdeckel 1 auch ausschließlich manuell betätigt werden könnte, ist die Betätigung des auch zusammengelegten Verdecks 3 in das hydraulische System des Fahrzeuges eingebunden, vorteilhafterweise natürlich in das Betätigungssystem für das Öffnen und Schließen des Verdecks 3 an sich. Zu diesem Zweck ist zumindest ein hydraulischer Arbeitszylinder 5 vorgesehen, vorteilhafterweise ein einfachwirkender Zylinder, der stangenseitig mit dem Druckmittel beaufschlagbar ist, und der vorteilhafterweise an einem über die zweite Achse 4 des Verdecks 3 hinausgehenden Hebel 6 angreift. Nachdem der Kofferraumdeckel 1 sich geöffnet hat - oder auch gleichzeitig mit diesem - hebt der Arbeitszylinder 5 das Verdeck 3 aus der in durchgezogenen Strichen dargestellten, abgelegten Stellung in die in strichlierter Darstellung gezeigte Position an, wobei das Verdeck 3 aber in zusammengefaltetem Zustand verbleibt. Der Arbeitszylinder 5 überwindet dabei das Gewicht des Verdecks 3 und ach die ungünstigen Hebelverhältnisse am Hauptantrieb. Das Gewicht des Verdecks 3 zieht dabei am Arbeitszylinder 5 in dessen Ausfahrrichtung und die Last liegt auf der stangenseitigen Ringfläche von dessen Kolben.

Um etwa bei Stromausfall oder ähnlichen Störungen eine Nothaltefunktion für das Verdeck 3 in angehobener Stellung zu gewährleisten, ist die nachfolgend in Zusammenhang mit Fig. 2 beschriebene Schaltungslogik vorgesehen. Wie in Fig. 2 zu erkennen ist, können auch zwei Arbeitszylinder 5 zur Realisierung der Beladehilfsfunktion vorgesehen sein, was durch die Drehmomenteinleitung auf beiden Seiten des Verdecks 3 bezüglich der Fahrzeug- und Verdeckslängsachse Verspannungen vermeidet und einen sicheren, gleichmäßigen Betrieb gestattet. Beide Arbeitszylinder 5 sind über eine Druckleitung 11 mit dem hydraulischen System des Fahrzeuges oder einer Druckmittelquelle verbunden, wobei die Ansteuerung über ein vorteilhafterweise stromlos geschlossenes 3/2-Wege-Sitzventil 7 erfolgt. Auch ein stromlos offenes Ventil wäre möglich, wobei dann die Last des Verdecks 3 von einem vorzugsweise federbelasteten, in Richtung zur Druckmittelquelle hin schließenden Rückschlagventil 8 aufgenommen wird. Das Absenken des Verdecks 3 bei ausgefallenem hydraulischen System oder ausgefallener Stromversorgung kann über die manuelle Notbetätigung 9 erfolgen, über welche das Druckmittel vorzugsweise in das Druckmittelreservoir abgesteuert werden kann. In dieses Druckmittelreservoir wird auch das Druckmittel abgesteuert, das bei normalem Betrieb der Arbeitszylinder 5 über das Ventil 7 ausgeschoben wird, wobei vorteilhafterweise zur Dämpfung der Bewegung und/oder Geschwindigkeitsbegrenzung in der Leitung vom Ventil 7 zum Druckmittelreservoir eine Drossel 10 eingesetzt ist.

## Patentansprüche

1. Verfahren zur Betätigung eines Verdecksystems bei Fahrzeugen, bei welchem im Zuge des Aufschwenkens des Kofferraumdeckels (1) das Verdeck (3) in Ruhestellung, allenfalls in zusammengefaltetem Zustand, im wesentlichen parallel zum Kofferraumdeckel (1) des Fahrzeuges verschwenkt werden kann, wobei das Verdeck (3) in Ruhestellung belassen wird, **dadurch gekennzeichnet, daß** das Verdeck (3) in Ruhestellung in dem durch den Kofferraumdeckel (1) verschließbaren Abteil des Fahrzeuges aufnehmbar und nach Öffnen des Kofferraumdeckels (3) entfaltbar und schließbar ist.

2. Verfahren nach Anspruch 1, **dadurch gekennzeichnet, dass** der Kofferraumdeckel (1) um eine erste fahrzeugfeste Achse und das Verdeck (3) um eine zweite fahrzeugfeste Achse verschwenkt werden, wobei die erste und zweite fahrzeugfeste Achse im wesentlichen parallel zueinander liegen.

3. Verfahren nach Anspruch 1 oder 2, **dadurch gekennzeichnet, dass** der Kofferraumdeckel (1) und das Verdeck (3) im wesentlichen gleichzeitig oder in Folge nacheinander bewegt werden.

4. Vorrichtung zur Betätigung eines Verdecksystems bei Fahrzeugen, bestehend aus einem, allenfalls aus mehreren, gegeneinander bewegbaren Verdeck-Elementen, welche aus einer Ruhestellung mit vorzugsweise in zusammengefaltetem Zustand angeordneten Elementen entfaltbar sind, wobei die Steueranordnung für die Antriebselemente des Verdecksystems eine Schaltstellung aufweist, in welcher lediglich ein Antriebselement (5) bzw. eine Gruppe von Antriebselementen angesteuert ist, welche das Verdeck in seiner Ruhestellung anhebt, **dadurch gekennzeichnet, daß** die Verdeck-Elemente (3) in Ruhestellung in dem durch den Kofferraumdeckel (1) verschließbaren Abteil aufgenommen sind, und in der Schaltstellung der Steueranordnung, in welcher das Verdeck (3) in seiner Ruhestellung angehoben wird, im wesentlichen parallel zum Kofferraumdeckel (1) des Fahrzeuges verschwenkt werden.

5. Vorrichtung nach Anspruch 4, **dadurch gekennzeichnet, dass** die Steueranordnung mit einer elektronischen Steuereinheit verbunden ist, die Ansteuerung des Antriebselementes (5) bzw. der Gruppe von Antriebselementen freigibt, sobald der Kofferraumdeckel (1) geöffnet ist.

6. Vorrichtung nach Anspruch 4 oder 5, **dadurch gekennzeichnet, dass** als Antriebselement ein Druckmittelzylinder, vorzugsweise einfach-wirkender hydraulischer Arbeitszylinder (5), vorgesehen ist.

7. Vorrichtung nach Anspruch 6, **dadurch gekennzeichnet, dass** der Arbeitszylinder (5) über ein stromlos geschlossenes Ventil, vorzugsweise ein 3/2-WegeSitzventil (7), mit der Druckmittelquelle verbunden ist.

8. Vorrichtung nach Anspruch 7, **dadurch gekennzeichnet, dass** zwischen der Druckmittelquelle und dem Ventil (7) ein zur Druckmittelquelle hin schließendes Rückschlagventil (8) eingesetzt ist.

9. Vorrichtung nach einem der Ansprüche 4 bis 8, **dadurch gekennzeichnet, dass** die Abdeckung (1) um eine erste fahrzeugfeste Achse (2) und das Verdeck (3) um eine zweite fahrzeugfeste Achse (4) verschwenkbar sind, welche erste und zweite fahrzeugfeste Achse im wesentlichen parallel zueinander liegen.

10. Vorrichtung nach einem der Ansprüche 4 bis 9, **dadurch gekennzeichnet, dass** das Antriebselement (5) bzw. die Gruppe von Antriebselementen unmittelbar am Verdeck (3) angreift bzw. angreifen.

11. Vorrichtung nach einem der Ansprüche 4 bis 10, **dadurch gekennzeichnet, dass** das Antriebselement (5) bzw. die Gruppe von Antriebselementen an einem mit zumindest einem Verdeckelement (3) verbundenen Hebel angreift bzw. angreifen, vorzugsweise an einem gegenüber dem Verdeck (3) über die zweite fahrzeugfeste Achse (4) hinausgehenden Hebelarm (6).

## Claims

1. A method of actuating a folding-top system in vehicles, in which the folding top (3) can be pivoted into the rest position, if necessary in the folded state, substantially parallel to the boot lid (1) of the vehicle in the course of the pivoting-up of the boot lid (1), the folding top (3) being left in the rest position, **characterized in that** the folding top (3) is capable of being received in the rest position in the portion of the vehicle capable of being closed by the boot lid (1) and is capable of being unfolded and closed after the boot lid (3) [*sic - recte* (1)] has been opened.

2. A method according to Claim 1, **characterized in that** the boot lid (1) is pivoted about a first axis fixed with respect to the vehicle and the folding top (3) is pivoted about a second axis fixed with respect to the vehicle, the first and the second axes fixed with respect to the vehicle being situated substantially parallel to each other.

3. A method according to Claim 1 or 2, **characterized in that** the boot lid (1) and the folding top (3) are moved substantially simultaneously or in succession one after the other.

4. An apparatus for actuating a folding-top system in vehicles, comprising one, and possibly a plurality of, folding-top elements which are movable with respect to one another and which are capable of being unfolded out of a rest position with elements preferably arranged in the folded state, the control device for the driving elements of the folding-top system having a switch position in which only one driving element (5) or one group of driving elements is actuated, which raises the folding top in its rest position, **characterized in that** the folding-top elements (3) are received in the rest position in the compartment capable of being closed by the boot lid (1), and in the switch position of the control device, in which the folding top (3) is raised in its rest position, they are pivoted substantially parallel to the boot lid (1) of the vehicle.

5. An apparatus according to Claim 4, **characterized in that** the control device is connected to an electronic control unit which releases the actuation of the driving element (5) or the group of driving elements as soon as the boot lid (1) has been opened.

6. An apparatus according to Claim 4 or 5, **characterized in that** a pressure-medium cylinder, preferably a single-acting hydraulic operating cylinder (5), is provided as the driving element.

7. An apparatus according to Claim 6, **characterized in that** the operating cylinder (5) is connected to the source of pressure medium by way of a valve closed without current, preferably a 3/2-way seat valve (7).

8. An apparatus according to Claim 7, **characterized in that** a non-return valve (8) closing towards the source of pressure medium is inserted between the source of pressure medium and the valve (7).

9. An apparatus according to one of Claims 4 to 8, **characterized in that** the cover (1) is pivotable about a first axis (2) fixed with respect to the vehicle and the folding top (3) is pivotable about a second axis (4) fixed with respect to the vehicle, which first and second axes fixed with respect to the vehicle are situated substantially parallel to each other.

10. An apparatus according to one of Claims 4 to 9, **characterized in that** the driving element (5) or the group of driving elements engages or engage directly on the folding top (3).

11. An apparatus according to one of Claims 4 to 10, **characterized in that** the driving element (5) or the group of driving elements engages or engage on a lever connected to at least one folding-top element (3), preferably on a lever arm (6) extending beyond the second axis (4) fixed with respect to the vehicle towards the folding top (3).

## Revendications

1. Procédé de manoeuvre d'un système de capote de véhicules, dans lequel au cours du pivotement du capot de coffre (1), la capote (3) en position de repos, au besoin dans l'état replié, peut être pivotée sensiblement parallèlement au capot (1) du coffre du véhicule, la capote (3) étant laissée en position de repos, **caractérisé en ce que** la capote (3) peut être reçue en position de repos dans le compartiment du véhicule pouvant être fermé par le capot (1) du coffre et peut être dépliée et verrouillée après ouverture du capot (1) du coffre.

2. Procédé selon la revendication 1, **caractérisé en ce que** le capot (1) du coffre peut pivoter autour d'un premier axe solidaire du véhicule et la capote (3) autour d'un second axe solidaire du véhicule, les premier et second axes solidaires du véhicule se trouvant sensiblement mutuellement parallèles.

3. Procédé selon la revendication 1 ou 2, **caractérisé en ce que** le capot (1) du coffre et la capote (3) sont déplacés sensiblement simultanément ou en succession.

4. Dispositif de manoeuvre d'un système de capote de véhicules, se composant d'un, au besoin de plusieurs éléments de capote mutuellement déplaçables, qui peuvent être dépliés depuis une position de repos avec de préférence des éléments disposés dans l'état replié, le dispositif de commande pour les éléments d'entraînement du système de capote présentant une position de commande, dans laquelle uniquement un élément d'entraînement (5) ou un groupe d'éléments d'entraînement est commandé, qui soulève la capote dans sa position de repos, **caractérisé en ce que** des éléments de capote (3) sont reçus en position de repos dans le compartiment pouvant être fermé par le capot (1) du coffre, et dans la position de commande du dispositif de commande, dans laquelle la capote (3) est soulevée dans sa position de repos, sont pivotés sensiblement parallèlement au capot (1) du coffre du véhicule.

5. Dispositif selon la revendication 4, **caractérisé en ce que** le dispositif de commande est relié à une unité de commande électronique, qui libère la commande de l'élément d'entraînement (5) ou du groupe d'éléments d'entraînement, dès que le capot (1) du coffre est ouvert.

6. Dispositif selon la revendication 4 ou 5, **caractérisé en ce qu'**en tant qu'élément d'entraînement est prévu un vérin à fluide sous pression, de préférence un vérin hydraulique à simple effet (5).

7. Dispositif selon la revendication 6, **caractérisé en ce que** le vérin (5) est relié à la source de fluide sous pression par l'intermédiaire d'une soupape fermée sans courant, de préférence une soupape à 3/2 voies (7).

8. Dispositif selon la revendication 7, **caractérisé en ce qu'**entre la source de fluide sous pression et la soupape (7) est disposée une soupape de retenue (8) se fermant en direction de la source de fluide sous pression.

9. Dispositif selon une des revendications 4 à 8, **caractérisé en ce que** le recouvrement (1) peut pivoter autour d'un premier axe (2) solidaire du véhicule et la capote (3) autour d'un second axe (4) solidaire du véhicule, les premier et second axes solidaires du véhicule se trouvant sensiblement mutuellement parallèles.

10. Dispositif selon une des revendications 4 à 9, **caractérisé en ce que** l'élément d'entraînement (5) ou le groupe d'éléments d'entraînement attaque ou attaquent directement la capote (3).

11. Dispositif selon une des revendication 4 à 10, **caractérisé en ce que** l'élément d'entraînement (5) ou le groupe d'éléments d'entraînement attaque ou attaquent au moins un levier relié à un élément de capote (3), de préférence un bras de levier (6) s'éloignant vis-à-vis de la capote (3) par l'intermédiaire du second axe (4) solidaire du véhicule.
